(19) **Europäisches Patentamt**

**European Patent Office**

**Office européen des brevets**

(11) **EP 1 426 911 B1**

(12) **EUROPÄISCHE PATENTSCHRIFT**

(45) Veröffentlichungstag und Bekanntmachung des Hinweises auf die Patenterteilung:
**24.08.2005   Patentblatt 2005/34**

(51) Int Cl.⁷: $G08G\ 1/16$, B60K 31/00

(21) Anmeldenummer: 03011320.3

(22) Anmeldetag: **19.05.2003**

(54) **Vorrichtung zur Abstandsregelung bei Kraftfahrzeugen**

Apparatus for vehicle distance control

Dispositif pour réglage de distance entre des véhicules

(84) Benannte Vertragsstaaten:
**DE FR GB IT**

(30) Priorität: **04.12.2002   DE 10256529**

(43) Veröffentlichungstag der Anmeldung:
**09.06.2004   Patentblatt 2004/24**

(73) Patentinhaber: **ROBERT BOSCH GMBH**
**70442 Stuttgart (DE)**

(72) Erfinder:
• **Michi, Harald**
  **75248 Oelbronn-Duerrn (DE)**
• **Scherl, Michael**
  **71679 Asperg (DE)**
• **Weilkes, Michael**
  **74343 Sachsenheim (DE)**
• **Uhler, Werner**
  **76646 Bruchsal (DE)**

(56) Entgegenhaltungen:
WO-A-01/98101          DE-A- 10 007 501
US-B1- 6 223 117       US-B1- 6 337 638

**Beschreibung**

Die Erfindung betrifft eine Vorrichtung zur Abstandsregelung bei Kraftfahrzeugen, mit einer Sensoreinrichtung zur Ortung von Objekten, die sich auf der von dem Fahrzeug befahrenen Fahrspur vor dem Fahrzeug befinden, und zur Messung der Abstände dieser Objekte zum Fahrzeug, und mit einer Regeleinrichtung, die in Abhängigkeit von den gemessenen Abständen in das Antriebs- und/oder Bremssystem des Fahrzeugs eingreift.

Eine Vorrichtung dieser Art, die auch als ACC-System (Adaptive Cruise Control) bezeichnet wird, ist bekannt aus der Veröffentlichung SAE-Paper Nr. 96 10 10 "Adaptive Cruise Control, System Aspects and Development Trends", Winner et al., 1996.

Die Sensoreinrichtung wird üblicherweise durch einen winkelauflösenden Radarsensor gebildet, der Objekte im Vorfeld des Fahrzeugs erfaßt und außer den Objektabständen auch die Relativgeschwindigkeiten der Objekte relativ zum eigenen Fahrzeug sowie die Azimutwinkel der Objekte relativ zur Längsachse des eigenen Fahrzeugs mißt. Anhand der Abstands- und Winkeldaten lassen sich Radarziele erkennen, die sich abseits der eigenen Fahrspur auf Nebenspuren oder am Fahrbahnrand befinden. Diese Radarziele werden nicht berücksichtigt, da sie für die Abstandsregelung nicht relevant sind. Im folgenden soll deshalb der Begriff "Objekte" nur für Objekte auf der eigenen Fahrspur gebraucht werden.

Wenn mehrere Objekte vorhanden sind, so wird als Zielobjekt grundsätzlich dasjenige Objekt ausgewählt, das dem Fahrzeug am nächsten liegt, typischerweise ein unmittelbar vorausfahrendes Fahrzeug, und der Abstand zwischen dem vorausfahrenden Fahrzeug und dem eigenen Fahrzeug wird auf einen im Hinblick auf die Verkehrssicherheit geeignet gewählten Sollabstand geregelt. Der Sollabstand ist üblicherweise geschwindigkeitsabhängig und wird zumeist durch eine vom Fahrer wählbare Zeitlücke bestimmt, die den zeitlichen Abstand angibt, in dem das eigene Fahrzeug dem vorausfahrenden Fahrzeug folgt.

Die bisher in der Praxis eingesetzten ACC-Systeme sind generell für Fahrten auf Autobahnen oder gut ausgebauten Landstraßen vorgesehen, also für Verkehrssituationen, in denen mit relativ hoher Geschwindigkeit gefahren wird. Bei Geschwindigkeiten unterhalb einer bestimmten Grenzgeschwindigkeit von beispielsweise 30 km/h erfolgt eine Selbstabschaltung des Systems. Es gibt jedoch Bestrebungen, den Einsatzbereich dieser Systeme auch auf den unteren Geschwindigkeitsbereich auszudehnen, so daß beispielsweise bei Stauungen auch ein automatischer Stop & Go Betrieb ermöglicht wird, bei dem das Fahrzeug automatisch in den Stand gebremst werden kann und unter bestimmten Bedingungen auch automatisch wieder anfährt, wenn sich das vorausfahrende Fahrzeug wieder in Bewegung setzt. Für diese Einsatzfälle ist jedoch eine Bestimmung des Sollabstands allein anhand der Zeitlücke nicht angemessen, weil dann bei der Verringerung der Fahrzeuggeschwindigkeit bis in den Stand auch der Sollabstand auf 0 abnehmen würde. Dem läßt sich dadurch Rechnung tragen, daß zu dem durch die Zeitlücke bestimmten Abstand, also dem Produkt aus der Zeitlücke τ und der Eigengeschwindigkeit V des Fahrzeugs, ein konstanter Anhalteabstand A addiert wird. Für den Sollabstand dsoll erhält man also dsoll = τ*V + A.

Für die erweiterte Funktionalität des ACC-Systems ist in der Regel auch eine erweiterte Sensorik erforderlich, beispielsweise eine Ergänzung des Radarsensors durch zusätzliche Nahbereichssensoren, beispielsweise Nahbereichs-Radarsensoren, Lidarsensoren oder ein Kamerasystem mit elektronischer Bildverarbeitung. Mit dieser erweiterten Sensorik wird eine möglichst lückenlose Erfassung des näheren Umfelds des Fahrzeugs angestrebt, so daß auch Verkehrssituationen mit höherer Dynamik, beispielsweise das plötzliche Einscheren eines Fahrzeugs von der Nebenfahrbahn und dergleichen zuverlässig und rechtzeitig erkannt werden können. Gerade im unteren Geschwindigkeitsbereich, beispielsweise bei Annäherung an ein Stauende, treten häufig Situationen mit hoher Dynamik auf, die zum Beispiel durch abrupte Bremsmanöver eines der vorausfahrenden Fahrzeuge ausgelöst werden und ein frühzeitiges und schnelles Reagieren des ACC-Systems erfordern.

Vorteile der Erfindung

Die Erfindung mit den in Anspruch 1 angegebenen Merkmalen hat den Vorteil, daß auf Störungen des Verkehrsflusses insbesondere bei Kolonnenfahrten frühzeitiger und angemessener reagiert werden kann.

Der Grundgedanke der Erfindung besteht darin, daß bei der Abstandsregelung nicht nur die Bewegungsgrößen des unmittelbar vorausfahrenden Fahrzeugs (des Zielobjekts), sondern auch Bewegungsgrößen des übernächsten und ggf. noch weiter voraus befindlicher Objekte berücksichtigt werden. Zu diesem Zweck wird für jedes der Objekte oder zumindest für die Objekte im näheren Umfeld ein Mindestabstand berechnet. Der Mindestabstand für das nächstgelegene Objekt, also das unmittelbar vorausfahrende Fahrzeug, kann mit dem oben beschriebenen Sollabstand identisch sein. Bei der Berechnung des Mindestabstands für das übernächste Objekt wird berücksichtigt, daß zwischen diesem Objekt und dem eigenen Fahrzeug noch ein weiteres Objekt, nämlich das unmittelbar vorausfahrende Fahrzeug vorhanden ist, und dementsprechend wird zu dem Sollabstand ein Zuschlag hinzuaddiert, der dem Anhalteabstand und der Länge des unmittelbar vorausfahrenden Fahrzeugs Rechnung trägt. Entsprechend wird für jedes weitere Objekt ein Zuschlag für jedes Zwischenobjekt hinzuaddiert, das sich zwischen diesem Objekt und dem eigenen Fahrzeug befindet. Der in der Vorrichtung benutzte Regelalgorithmus wird so modifiziert, daß keiner der berechneten Mindestabstände unterschritten wird. Im Normalfall kann also wie bisher auf den Sollabstand zum unmittelbar vorausfahrenden Fahrzeug geregelt werden. Wenn die Abstandsmessungen für die übrigen Objekte jedoch ergeben, daß die Unterschreitung eines der berechneten Mindestabstände droht, wird die durch den regulären Regelalgorithmus vorgegebene (positive oder negative) Sollbeschleunigung des Fahrzeugs so weit verringert, daß der Mindestabstand nicht unterschritten wird bzw. eine schon eingetretene Unterschreitung wieder rückgängig gemacht wird.

Der wesentliche Vorteil besteht darin, daß auf ein plötzlich vor einem oder mehreren der vorausfahrenden Fahrzeuge auftauchendes Hindernis oder ein abruptes Bremsmanöver eines der weiter vorn fahrenden Fahrzeuge unverzüglich reagiert werden kann und nicht erst abgewartet zu werden braucht, bis nacheinander alle zwischen dem Hindernis und dem eigenen Fahrzeug befindlichen Fahrzeuge reagiert haben und schließlich eine Verzögerung des unmittelbar vorausfahrenden Fahrzeugs feststellbar ist. So wird gerade im unteren Geschwindigkeitsbereich, beispielsweise bei Annäherung an ein Stauende, die Verkehrssicherheit beträchtlich erhöht und eine vorausschauende Fahrweise erreicht, die abrupte oder heftige Bremsmanöver des eigenen Fahrzeugs weitgehend vermeidet.

Vorteilhafte Ausgestaltungen der Erfindung sind in den Unteransprüchen angegeben.

Im einfachsten Fall wird bei der Berechnung des Mindestabstands für ein gegebenes Objekt für jedes zwischen diesem Objekt und dem eigenen Fahrzeug vorhandene Objekt ein konstanter Wert zu dem Sollabstand hinzuaddiert. Dieser konstante Wert entspricht der Summe aus dem üblichen Anhalteabstand und einem typischen Wert für die Länge eines Objekts (Fahrzeugs). Eine Verfeinerung besteht darin, daß die Länge jedes einzelnen Zwischenobjekts geschätzt oder gemessen wird und dann für jedes Zwischenobjekt ein Term hinzuaddiert wird, der der Summe aus dem Anhalteabstand und der Objektlänge entspricht. Ein Schätzwert für die Länge eines Objekts läßt sich beispielsweise dadurch erhalten, daß anhand der mit Hilfe der Sensoreinrichtung meßbaren Objektbreite zwischen verschiedenen Fahrzeugkategorien unterschieden wird (Zweirad, Pkw, Van, Lkw) und dann je nach Fahrzeugkategorie ein geeigneter Standardwert für die Objektlänge eingesetzt wird. Häufig ist es mit einer erweiterten Abstandssensorik jedoch auch möglich, die Länge eines Objekts direkt zu messen. Eine relativ zuverlässige Information über die Objektlänge läßt sich insbesondere durch ein Einsatz von Kamerasystemen erhalten, doch ist dies in gewissen Grenzen auch mit Radar- und Lidarsystemen möglich, weil - insbsonderer bei Verwendung mehrerer Sensoren - Ortungssignale nicht nur von der Rückfront des Fahrzeugs, sondern auch aus dem vorderen Fahrzeugbereich empfangen werden.

Für die Berechnung der Mindestabstände ist es zweckmäßig, eine nach wachsenden Abständen sortierte Liste der Objekte anzulegen und dann die Mindestabstände iterativ zu berechnen.

Ein Ausführungsbeispiel der Erfindung ist in den Zeichnungen dargestellt und in der nachfolgenden Beschreibung näher erläutert.

Es zeigen:

Figur 1 eine Skizze eines mit der erfindungsgemäßen Vorrichtung ausgerüsteten Fahrzeugs und zweier vorausfahrender Fahrzeuge;

Figur 2 ein Blockdiagramm der erfindungsgemäßen Vorrichtung;

Figur 3 ein Ablaufdiagramm zur Erläuterung der Arbeitsweise der Vorrichtung; und

Figur 4 ein Weg-Zeitdiagramm zur Illustration der Wirkungsweise der Vorrichtung.

Beschreibung des Ausführungsbeispiels

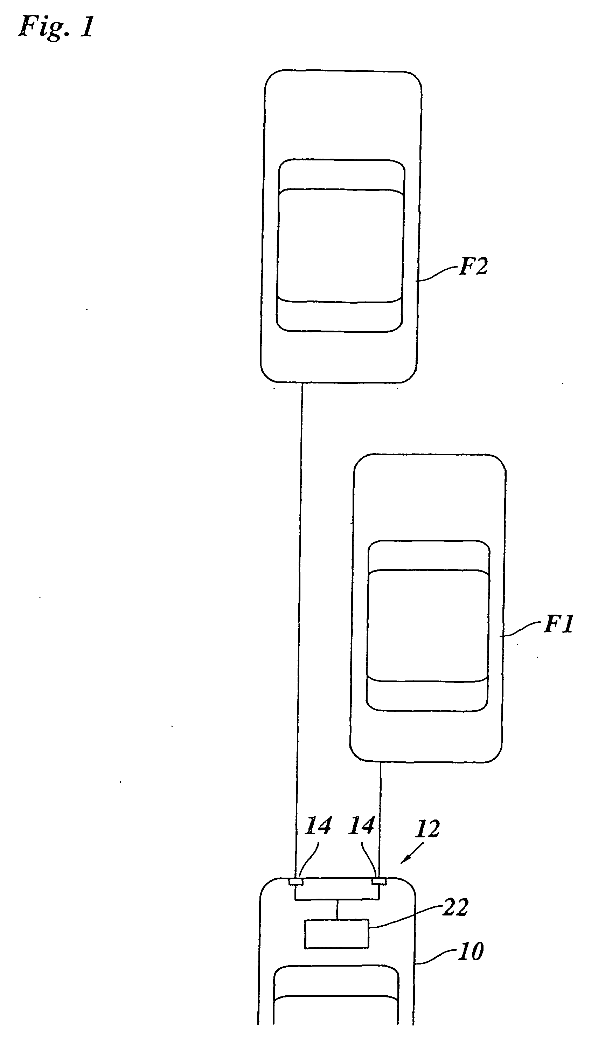

In Figur 1 ist im unteren Rand der Zeichnung die Frontpartie eines Fahrzeugs 10 gezeigt, das mit einer Vorrichtung zur Abstandsregelung (ACC-System) ausgerüstet ist. Diese Vorrichtung umfaßt eine Sensoreinrichtung 12, die im gezeigten Beispiel durch zwei symmetrisch beiderseits der Längsmittelachse des Fahrzeugs 10 angeordnete Radarsensoren 14 gebildet wird, und eine Regeleinrichtung 22, die Signale der Radarsensoren 14 empfängt und auswertet. Mit Hilfe der Sensoreinrichtung 12 werden im gezeigten Beispiel zwei Objekte F1 und F2 geortet, die sich vor dem Fahrzeug 10 auf der von diesem Fahrzeug befahrenen Fahrspur befinden. Im gezeigten Beispiel handelt es sich bei den Objekten um Pkws. Die Verwendung mehrerer Radarsensoren 14, deren Ortungsbereich sich jeweils über einen größeren Winkelbereich erstreckt, verringert die Wahrscheinlichkeit, daß das weiter vorn befindliche Objekt F2 durch das näher am eigenen Fahrzeug 10 gelegene Objekt F1 abgeschattet wird. In der Regel ist es auf diese weise möglich, Ortungssignale von nahezu allen in nicht zu großem Abstand vorausfahrenden Fahrzeugen zu erhalten. Die Ortungssicherheit wird noch dadurch verbessert, daß die Radarmessungen zyklisch wiederholt werden und die bei einer Messung erkannten Objekte im nächsten Meßzyklus mit Hilfe einer sogenannten Trakking-Prozedur anhand ähnlicher Abstands-, Geschwindigkeits- und Winkeldaten wiedererkannt werden, so daß die Objekte quasi kontinuierlich verfolgt werden. Ein vorübergehender Objektverlust durch Abschattung kann daher durch Extrapolation ausgeglichen werden.

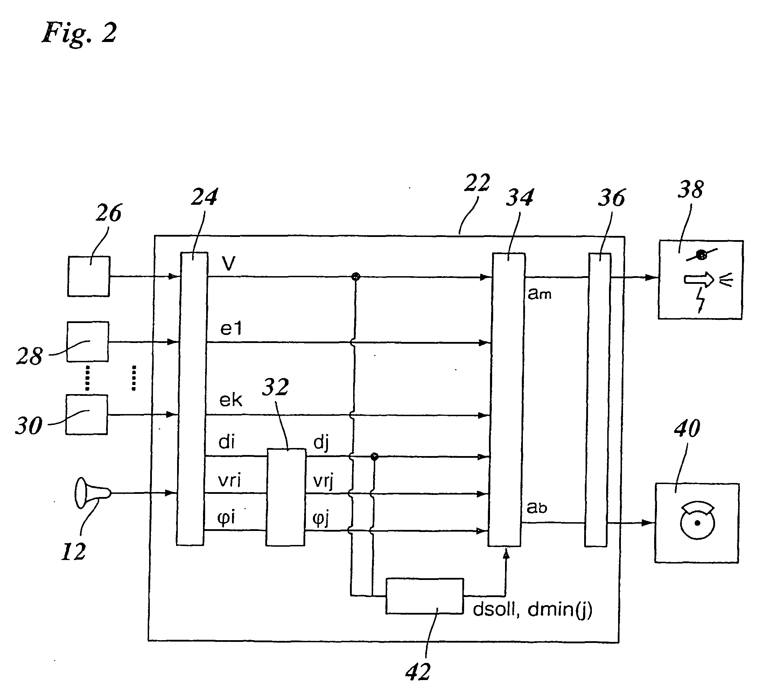

In Figur 2 ist das ACC-System des Fahrzeugs 10 als Blockdiagramm dargestellt. Die Regeleinrichtung 22, die beispielsweise durch einen oder mehrere Mikrocomputer gebildet wird, empfängt über eine Eingangsschaltung 24 Signale der Sensoreinrichtung 12 sowie ein Signal eines Geschwindigkeitssensors 26, der die Eigengeschwindigkeit V des Fahrzeugs 10 mißt, und Signale weiterer Sensoren 28, 30, die hier nur summarisch dargestellt sind und weitere für die Regelung relevante Eingangsgrößen e1 - ek messen.

Die Eingangsschaltung 24 liefert für jedes von der Sensoreinrichtung 12 geortete Radarziel i einen Satz von Ortungsdaten an ein Bewertungsmodul 32. Bei den Ortungsdaten handelt es sich im gezeigten Beispiel um den Abstand di, die Relativgeschwindigkeit vri und den Azimutwinkel φi des betreffenden Radarziels. Das Bewertungsmodul 32 entscheidet anhand der Abstands- und Winkeldaten, ob es sich bei dem Radarziel um ein Objekt auf der eigenen Fahrspur handelt oder nicht. Die Abstände dj, Relativgeschwindigkeiten vrj und Azimutwinkel φj der Objekte auf der eigenen Fahrspur werden an einen Regler 34 übermittelt, der auch die übrigen Eingangsgrößen V, e1 - ek empfängt. Im normalen Regelbetrieb wählt der Regler 34 anhand der Abstandsdaten dj das Objekt F1, das dem Fahrzeug 10 am nächsten liegt, als Zielobjekt für die Abstandsregelung aus. Mit Hilfe bekannter Regelalgorithmen berechnet der Regler 34 anhand der Eigengeschwindigkeit V des Fahrzeugs und anhand der Ortungsdaten des Zielobjekts Stellgrößen $a_m$, $a_b$, die über eine Ausgangsschaltung 36 an Stellelemente 38, 40 des Antriebssystems und des Bremssystems des Fahrzeugs 10 ausgegeben werden. Auf diese Weise wird der Abstand zwischen dem Fahrzeug 10 und dem Objekt F1 auf einen angemessenen Sollabstand dsoll geregelt. Der Sollabstand dsoll wird dem Regler 34 hier von einem Abstandsmodul 42 zugeführt, das diesen Sollabstand zum Beispiel nach der Formel

$$dsoll = \tau * V + A$$

berechnet. Darin ist V die vom Geschwindigkeitssensor 26 gemessene Eigengeschwindigkeit des Fahrzeugs, und τ ist eine vom Fahrer wählbare Zeitlücke, die den zeitlichen Abstand bestimmt, mit dem das Objekt F1 verfolgt werden soll. Das Produkt τ*V repräsentiert den entsprechenden räumlichen Abstand dτ, der im folgenden als Zeitlückenabstand bezeichnet werden soll. Der Summand A ist ein geeignet gewählter Anhalteabstand. Wenn das vorausfahrende Fahrzeug (Objekt F1) anhält und daraufhin das Fahrzeug 10 automatisch in den Stand gebremst wird, stellt die beschriebene Wahl des Sollabstands dsoll sicher, daß das Fahrzeug 10 in dem Anhalteabstand A hinter dem Objekt F1 zum Stehen kommt. Weitere Beispiele für Formeln zur Berechnung von dsoll sind:

$$dsoll = \tau * (V + vr) + A$$

$$dsoll = MAX\{\tau * V, A\}$$

$$dsoll = MAX\{\tau * (V + vr), A\},$$

mit (V + vr) = Geschwindigkeit des Zielobjekts.

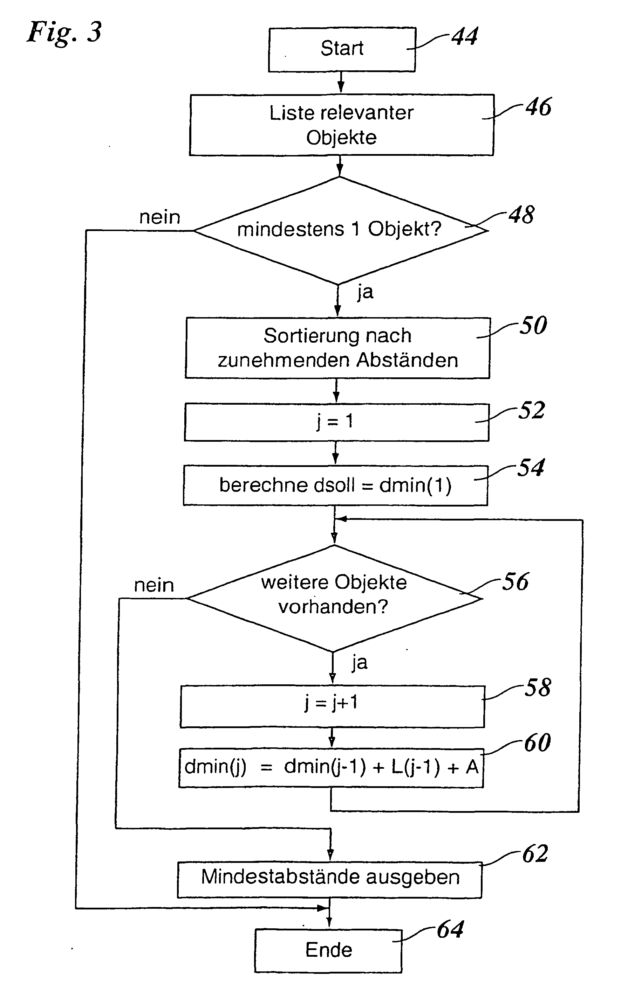

Dem Abstandsmodul 42 werden vom Bewertungsmodul 32 auch die Abstandsdaten dj der übrigen Objekte zugeführt. Anhand dieser Abstandsdaten berechnet das Abstandsmodul 42 für jedes Objekt mit dem Index j einen zugehörigen Mindestabstand dmin(j), wie weiter unten anhand des Flußdiagramms in Figur 3 näher erläutert werden soll.

Das Bewertungsmodul 32, der Regler 34 und das Abstandsmodul 42 sind in Figur 2 aus Gründen der Übersichtlichkeit und Anschaulichkeit als getrennte Blöcke dargestellt. Ihre Funktionen können jedoch auch von ein und demselben Mikroprozessor ausgeführt werden.

In Figur 3 ist ein mögliches Beispiel für eine Prozedur zur Berechnung der Mindestabstände dargestellt, die vom Abstandsmodul periodisch, beispielsweise synchron mit dem Meßzyklus der Sensoreinrichtung 12, ausgeführt wird. Nach dem Start der Prozedur in Schritt 44 wird zunächst in Schritt 46 eine Liste aller relevanten Objekte angelegt, also aller Objekte, für die das Bewertungsmodul 32 festgestellt hat, daß sie sich auf der eigenen Fahrspur befinden.

In Schritt 48 wird geprüft, ob diese Liste mindestens ein Objekt enthält. Wenn dies nicht der Fall ist, wird die Prozedur unmittelbar beendet. In diesem Fall ist eine Abstandsregelung weder erforderlich noch möglich. Der Regler 34 regelt dann die Geschwindigkeit des Fahrzeugs 10 auf eine vom Fahrer gewählte Wunschgeschwindigkeit.

Wenn die Objektliste mindestens ein Objekt enthält, werden diese Objekte in Schritt 50 nach zunehmenden Abständen dj sortiert. Der Index j soll im folgenden den Index der Objekte in der sortierten Liste bezeichnen.

In Schritt 50 wird j = 1 gesetzt, d.h., es wird zunächst das Objekt F1 mit dem kleinsten Abstand bearbeitet. In Schritt 54 wird dann der Sollabstand dsoll nach der bereits angegebenen Formel berechnet. Dieser Sollabstand ist zugleich der Mindestabstand dmin (1) für das Objekt F1.

In Schritt 56 wird geprüft, ob weitere Objekte in der sortierten Liste vorhanden sind. Wenn dies der Fall ist, wird in Schritt 58 der Index j um 1 erhöht, d.h., es wird nun das nächste Objekt F2 bearbeitet.

In Schritt 60 wird der Mindestabstand dmin(j) berechnet, indem der zuvor berechnete Mindestabstand dmin(j-1) des in der Liste vorangehenden Objekts um zwei additive Terme L(j-1) und A erhöht wird. Der Term L(j-1) repräsentiert die Länge des Objekts j-1, im vorliegenden Fall also die Länge des Objekts F1. Im einfachsten Fall ist L ein von der Beschaffenheit des tatsächlichen Objekts unabhängiger Standardwert, der etwa einer mittleren Fahrzeuglänge entspricht. Im vorliegenden Beispiel ist jedoch die Sensoreinrichtung 12 in der Lage, die Breite des Objekts F1 zu erkennen und das Objekt anhand seiner Breite als Pkw zu identifizieren. Für L(j-1) wird dann eine Standardlänge für Pkw eingesetzt. Der Term A ist der bereits erwähnte Anhalteabstand. Als Mindestabstand für das Objekt F2 erhält man somit insgesamt:

$$dmin(2) = \tau{*}V + A + L(1) + A$$

Der Mindestabstand für das zweite Objekt ist also gleich dem Zeitlückenabstand $d\tau$ plus zwei mal den Anhalteabstand A plus Länge des Objekts F1.

Im Anschluß an Schritt 60 erfolgt ein Rücksprung zu Schritt 56, und es wird erneut geprüft, ob weitere Objekte vorhanden sind. Die durch die Schritte 56, 58 und 60 gebildete Schleife wird solange wiederholt, bis sämtliche Objekte in analoger Weise abgearbeitet sind. Die Schleife wird dann über Schritt 62 verlassen, und eine Liste sämtlicher Mindestabstände einschließlich des Sollabstands dsoll wird vom Abstandsmodul 42 an den Regler 34 übergeben. Danach ist die Routine mit Schritt 64 beendet.

Der Regler 34 vergleicht nun in jedem Regelzyklus die vom Bewertungsmodul 32 übermittelten Objektabstände dj (Istabstände) mit den entsprechenden Mindestabständen, und wenn einer der Istabstände den Mindestabstand unterschreitet, wird die Regelung auf den Sollabstand ausgesetzt und stattdessen auf Wiederherstellung des Mindestabstands zu dem betreffenden Objekt geregelt. Wenn dieser Abstand wieder hergestellt ist, wird die normale Regelung auf den Sollabstand zum Objekt F1 wieder aufgenommen. Auf diese Weise ist sichergestellt, daß das Fahrzeug 10 dem Objekt F1 in dem vom Fahrer gewünschten Sollabstand folgt, solange die Mindestabstände zu den weiter vorn befindlichen Objekten (F2) eingehalten werden. Andererseits wird der nötige Mindestabstand zu keinem Objekt unterschritten.

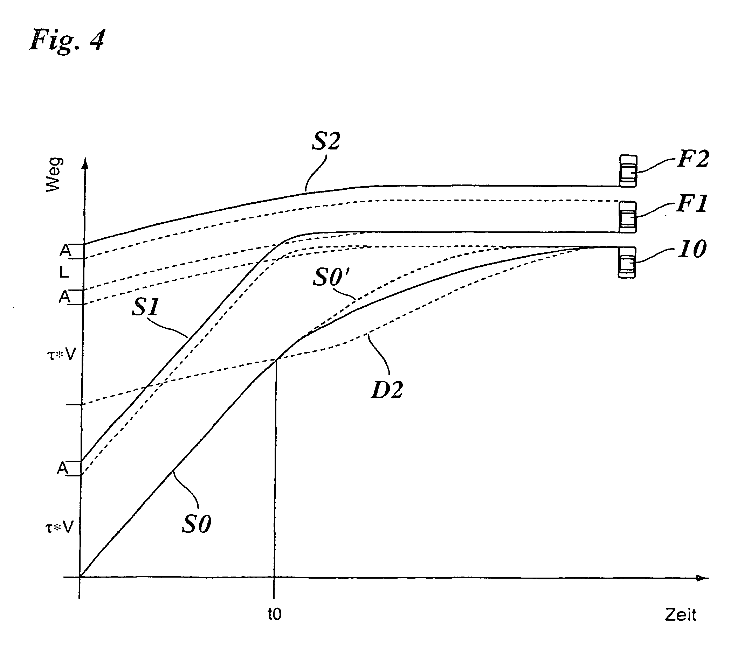

Der Effekt der hier beschriebenen Vorrichtung wird nun mit Hilfe des in Figur 4 gezeigten Weg-Zeit-Diagramms anhand eines Beispiels illustriert. Die Kurve S2 in Figur 4 ist die Weg-Zeit-Kurve der Rückfront des Objekts F2. Dieses Fahrzeug fährt zunächst mit mäßiger Geschwindigkeit und bremst dann in den Stand. Die Kurve S1 ist die Weg-Zeit-Kurve der Rückfront des Objekts F1, das sich F2 mit relativ hoher Geschwindigkeit nähert, dann scharf abbremst und schließlich im Anhalteabstand A hinter F2 zum Stehen kommt. Die Kurve S0 ist die Weg-Zeit-Kurve der Vorderfront des Fahrzeugs 10, das dem Objekt F1 im Sollabstand $\tau{*}V + A$ folgt. Der Mindestabstand dmin(2) zum Objekt F2 ist durch die Kurve D2 angegeben. Dieser Mindestabstand bleibt konstant, solange sich die Eigengeschwindigkeit V des Fahrzeugs 10 nicht ändert.

Zum Zeitpunkt t0 wird der Mindestabstand dmin(2) unterschritten. Der Regler 34 reagiert sofort mit einer Verzögerung des Fahrzeugs 10, um den Abstand wieder auf den Mindestabstand zu vergrößern. Wegen des Terms $\tau{*}V$ nimmt dieser Mindestabstand in dem Maße ab, wie die Eigengeschwindigkeit V des Fahrzeugs 10 abnimmt. Das Fahrzeug 10 wird sanft abgebremst und kommt schließlich im Anhalteabstand A hinter F1 zum Stehen.

Würde der Mindestabstand dmin(2) nicht berücksichtigt, so würde das Fahrzeug 10 zum Zeitpunkt t0 noch nicht verzögern, sondern weiter mit dem Sollabstand dsoll dem Objekt F1 folgen, dessen Verzögerung im Zeitpunkt t0 gerade erst eingesetzt hat. Erst mit zunehmender Verzögerung des Objekts F1 würde auch das Fahrzeug 10 verzögern, wobei der Sollabstand wiederum mit der Eigengeschwindigkeit V abnähme. Es ergäbe sich dann für das Fahrzeug 10 die gestrichelt eingezeichnete Weg-Zeit-Kurve S0'. Es ist zu erkennen, daß das Fahrzeug 10 in diesem Fall erst später verzögert würde und dann umso schärfer abgebremst werden müßte.

Durch die Berücksichtigung des Mindestabstands zum Objekt F2 wird somit eine frühzeitigere und wesentlich sanftere Verzögerung des Fahrzeugs 10 ermöglicht. Dieser Effekt wäre noch weit ausgeprägter, wenn das Objekt F1 noch später oder gar nicht bremsen und auf das Objekt F2 auffahren würde. Ebenso ergibt sich durch die Berücksichtigung der Mindestabstände ein noch ausgeprägterer Effekt, wenn vor dem Fahrzeug 10 mehr als zwei Objekte vorhanden sind und eines der vorderen Objekte plötzlich scharf bremsen muß wie hier das Objekt F1. In diesem Fall kumulieren sich die Reaktionszeiten von Fahrzeug zu Fahrzeug im Sinne einer Kettenreaktion, ein typisches Szenario, das bei Kolonnenfahrten häufig zu Auffahrunfällen führt. Die hier vorgeschlagene Maßnahme trägt dazu bei, zu verhindern, daß das eigene Fahrzeug 10 in solche Auffahrunfälle verwickelt wird.

Bei dem oben beschriebenen einfachen Ausführungsbeispiel ist eine vorübergehende Unterschreitung eines oder mehrerer der Mindestabstände dmin(j) nicht ausgeschlossen. Gemäß einer weiteren Ausgestaltung der Erfindung ist es jedoch möglich, das Regelsystem so auszulegen, daß ein Regeleingriff bereits erfolgt, bevor einer der Mindestabstände tatsächlich unterschritten wird. Dies läßt sich z.B. dadurch erreichen, daß jeder der ermittelten Mindestabstände dmin(j) als Sollabstand betrachtet wird, für jeden dieser Sollabstände nach den üblichen Algorithmen eine entsprechende Sollbeschleunigung (oder -verzögerung) des Fahrzeugs berechnet wird und dann der tatsächliche Regeleingriff anhand der kleinsten dieser Sollbeschleunigungen erfolgt.

Eine andere Möglichkeit besteht darin, die Mindestabstände, bei denen die Längen L und Anhalteabstände A von etwaigen Zwischenfahrzeugen bereits berücksichtigt sind, schon in die Zielobjektauswahl einfließen zu lassen. Es sind verschiedene Algorithmen zur Zielobjektauswahl bekannt, bei denen das maßgebliche Auswahlkriterium die Wahrscheinlichkeit oder die Gefahr ist, daß es zu einer Kollision mit dem betreffenden Objekt bzw. zu einer Unterschreitung des Mindestabstands zu diesem Objekt kommt. Wenn hier als Mindestabstände die in der oben beschriebenen Weise gebildeten Mindestabstände dmin(j) verwendet werden, so wird als Zielobjekt nicht notwendigerweise das unmittelbar vorausfahrende Fahrzeug ausgewählt, sondern das Fahrzeug, bei dem am ehesten eine Unterschreitung des betreffenden Mindestabstands droht. In dem in Figur 4 gezeigten Beispiel würde dies bedeuten, daß schon vor dem Zeitpunkt t0 das Objekt F2 als Zielobjekt ausgewählt würde und daß auf den Mindestabstand dmin(2) zu diesem Objekt geregelt und dementsprechend das Fahrzeug 10 bereits zu einem früheren Zeitpunkt verzögert würde, um diesen Mindestabstand einzuhalten.

Während in dem hier beschriebenen Ausführungsbeispiel der Mindestabstand von Objekt zu Objekt jeweils nur um den Betrag A + L erhöht wird, ist es in einer modifizierten Ausführungsform auch denkbar, den Mindestabstand von Objekt zu Objekt um einen zusätzlichen Zeitlückenabstand zu erhöhen. entsprechend einer relativ klein gewählten Zeitlücke $\tau'$ von beispielsweise 1 s:

$$dmin(j) = \tau{*}V + A + \tau'{*}V + L(1) + A$$

Die Zeitlückenabstände $\tau'{*}V$ entsprächen den Abständen, die normalerweise von den Fahrern der vorausfahrenden Fahrzeuge eingehalten werden sollten. Wenn dann einer der Fahrer der vorausfahrenden Fahrzeuge zu dicht auffährt, kann die Vorrichtung diesen Fehler automatisch kompensieren, indem sie den Sicherheitsabstand zwischen dem eigenen Fahrzeug und dem unmittelbar vorausfahrenden Fahrzeug nach Maßgabe des kleinsten Mindestabstands vergrößert.

**Patentansprüche**

1. Vorrichtung zur Abstandsregelung bei Kraftfahrzeugen, mit einer Sensoreinrichtung (12) zur Ortung von Objekten (F1, F2), die sich auf der von einem Fahrzeug (10) befahrenen Fahrspur vor dem Fahrzeug (10) befinden, und zur Messung der Abstände (dj) dieser Objekte zum Fahrzeug (10), und mit einer Regeleinrichtung (22), die in Abhängigkeit von den gemessenen Abständen in das Antriebs- und/oder Bremssystem des Fahrzeugs (10) eingreift, **dadurch gekennzeichnet, daß** ein Abstandsmodul (42) dazu vorgesehen ist, für mehrere der Objekte (F1, F2) jeweils einen Mindestabstand (dmin(j)) zu berechnen, dessen Größe die zwischen dem betreffenden Objekt (F2) und dem Fahrzeug (10) vorhandenen Objekte (F1) berücksichtigt, und daß die Regeleinrichtung (22) auf Einhaltung dieser Mindestabstände ausgelegt ist.

2. Vorrichtung nach Anspruch 1, **dadurch gekennzeichnet, daß** der Mindestabstand (dmin(1)) zu dem Objekt (F1), das dem Fahrzeug (10) am nächsten ist, die Summe aus einem geschwindigkeitsabhängigen, dem Sicherheitsabstand entsprechenden Term ($\tau{*}V$; $\tau{*}(V+Vr)$) und einem konstanten Anhalteabstand (A) ist.

3. Vorrichtung nach Anspruch 1, **dadurch gekennzeichnet, daß** der Mindestabstand (dmin(1)) zu dem Objekt (F1), das dem Fahrzeug (10) am nächsten ist, das Maximum aus einem geschwindigkeitsabhängigen, dem Sicherheitsabstand entsprechenden Term ($\tau{*}V$; $\tau{*}(V+Vr)$) und einem konstanten Anhalteabstand (A) ist.

4. Vorrichtung nach Anspruch 2 oder 3, **dadurch gekennzeichnet, daß** der Mindestabstand (dmin(j)) für ein weiter vom Fahrzeug (10) entferntes Objekt j gleich der Summe aus dem Mindestabstand (dmin(1)) für das dem Fahrzeug am nächsten liegende Objekt (F1) und einem Summanden ist, der der Summe der Anhalteabstände (A) und der Längen (L) aller Objekte entspricht, die sich zwischen dem Objekt j und dem Fahrzeug (10) befinden.

5. Vorrichtung nach Anspruch 4, **dadurch gekennzeichnet, daß** die Sensoreinrichtung (12) dazu ausgebildet ist, die Länge (L) der georteten Objekte (F1, F2) zu messen.

6. Vorrichtung nach Anspruch 4, **dadurch gekennzeichnet, daß** die Sensoreinrichtung (12) dazu ausgebildet ist, die Zugehörigkeit der georteten Objekte (F1, F2) zu verschiedenen Fahrzeugkategorien zu erkennen und daß das Abstandsmodul (42) bei der Berechnung des Mindestabstands für jedes Objekt eine der Fahrzeugkategorie entsprechende Standardlänge und/oder einen der Fahrzeugkategorie entsprechenden Anhalteabstand zugrundelegt.

7. Vorrichtung nach einem der vorstehenden Ansprüche, **dadurch gekennzeichnet, daß** das Abstandsmodul (42) dazu ausgebildet ist, die georteten Objekte (F1, F2) nach wachsenden Abständen (dj) zu sortieren, und daß das Abstandsmodul (42) dazu ausgebildet ist, die Mindestabstände (dmin(j)) iterativ zu berechnen.

8. Vorrichtung nach einem der vorstehenden Ansprüche, **dadurch gekennzeichnet, daß** die Regeleinrichtung (22) für die mehreren Mindestabstände (dmin(j)) jeweils einen zugehörigen Regeleingriff berechnet und aus diesen Regeleingriffen denjenigen auswählt, der der kleinsten Fahrzeugbeschleunigung entspricht.

9. Vorrichtung nach einem der Ansprüche 1 bis 7, **gekennzeichnet durch** eine Einrichtung (34), die aus mehreren Objekten (F1, F2) anhand der jeweils zugehörigen Mindestabstände (dmin(j)) ein Zielobjekt für die Abstandsregelung auswählt.

**Claims**

1. Apparatus for inter-vehicle distance control in motor vehicles, having a sensor device (12) for locating objects (F1, F2) which are located in front of the vehicle (10) on the lane which is being travelled on by the vehicle (10), and for measuring the distances (dj) between these objects and the vehicle (10), and having a control device (22) which intervenes in the drive system and/or brake system of the vehicle (10) as a function of the measured distances, **characterized in that** a distance module (42) is provided for calculating a minimum distance (dmin(j)) for each of a plurality of the objects (F1, F2), the value of which minimum distance (dmin(j)) takes into account the objects (F1) present between the object (F2) in question and the vehicle (10), and **in that** the control device (22) is designed to maintain these minimum distances.

2. Apparatus according to Claim 1, **characterized in that** the minimum distance (dmin(1)) from the object (F1) which is closest to the vehicle (10) is the sum of a speed-dependent term ($\tau^*V; \tau^*(V+Vr)$), which corresponds to the safety distance, and a constant stopping distance (A).

3. Apparatus according to Claim 1, **characterized in that** the minimum distance (dmin(1)) from the object (F1) which is closest to the vehicle (10) is the maximum value of a speed-dependent term ($\tau^*V; \tau^*(V+Vr)$), which corresponds to the safety distance, and a constant stopping distance (A).

4. Apparatus according to Claim 2 or 3, **characterized in that** the minimum distance (dmin(j)) for an object j which is further away from the vehicle (10) is equal to the sum of the minimum distance (dmin(1)) for the object (F1) which is closest to the vehicle and a summand which corresponds to the sum of the stopping distance (A) and the lengths (L) of all the objects which are located between the object j and the vehicle (10).

5. Apparatus according to Claim 4, **characterized in that** the sensor device (12) is designed to measure the length (L) of the located objects (F1, F2).

6. Apparatus according to Claim 4, **characterized in that** the sensor device (12) is designed to detect the inclusion of the located objects (F1, F2) in various vehicle categories, and **in that** the distance module (42) uses a standard length corresponding to the vehicle category and/or a stopping distance corresponding to the vehicle category for the calculation of the minimum distance for each object.

7. Apparatus according to one of the preceding claims, **characterized in that** the distance module (42) is designed to sort the located objects (F1, F2) according to increasing distances (dj), and **in that** the distance module (42) is designed to calculate the minimum distances (dmin(j)) iteratively.

8. Apparatus according to one of the preceding claims, **characterized in that** the control device (22) calculates an associated control intervention for each of the plurality of minimum distances (dmin(j)) and selects from these control interventions the one which corresponds to the lowest vehicle acceleration.

9. Apparatus according to of Claims 1 to 7, **characterized by** a device (34) which selects, from a plurality of objects (F1, F2), a target object for the distance control, by reference to the respectively associated minimum distances (dmin(j)).

**Revendications**

1. Dispositif de régulation de la distance pour véhicules automobiles, comprenant un dispositif capteur (12) destiné à localiser des objets (F1, F2) qui se trouvent sur la voie parcourue par un véhicule (10) en avant de celui-ci (10) et à mesurer les distances (dj) de ces objets au véhicule (10), et un dispositif de régulation (22) qui intervient dans le système de propulsion et/ou de freinage du véhicule (10) en fonction des distances mesurées,
**caractérisé en qu'**
il est prévu un module de distance (42) destiné à calculer pour chacun des objets (F1, F2) une distance minimale (dmin(j)), dont la grandeur prend en compte l'objet (F1) présent entre l'objet concerné (F2) et le véhicule (10) et le dispositif de régulation (22) est conçu pour maintenir ces distances minimales.

2. Dispositif selon la revendication 1,
**caractérisé en ce que**
la distance minimale (dmin(1)) à l'objet (F1) le plus proche du véhicule (10) est la somme d'un terme ($\tau^*V ; \tau^* (V+Vr)$) fonction de la vitesse, qui correspond à la distance de sécurité et à une distance d'arrêt constante (A).

**3.** Dispositif selon la revendication 1, **caractérisé en ce que** la distance minimale (dmin(1)) à l'objet (F1) le plus proche du véhicule (10) est le maximum d'un terme ($\tau$*V; $\tau$* (V+Vr)) fonction de la vitesse, qui correspond à la distance de sécurité et une distance d'arrêt constante (A).

**4.** Dispositif selon la revendication 2 ou 3, **caractérisé en ce que** la distance minimale (dmin(j)) pour un objet j le plus éloigné du véhicule (10) est égale à la somme de la distance minimale (dmin(1)) pour l'objet (F1) le plus proche du véhicule et d'un terme de somme qui correspond à la somme des distances d'arrêt (A) et des longueurs (L) de tous les objets qui se trouvent entre l'objet j et le véhicule (10).

**5.** Dispositif selon la revendication 4, **caractérisé en ce que** le dispositif capteur (12) est construit pour mesurer la longueur (L) des objets localisés (F1, F2).

**6.** Dispositif selon la revendication 4, **caractérisé en ce que** le dispositif capteur (12) est conçu pour reconnaître l'appartenance des objets localisés (F1, F2) à différentes catégories de véhicules et, dans le calcul de la distance minimale pour chaque objet, le module de distance (42) prend pour base une longueur standard correspondant à la catégorie du véhicule et/ou une distance d'arrêt correspondant à la catégorie du véhicule.

**7.** Dispositif selon une des revendications précédentes, **caractérisé en ce que** le module de distance (42) est conçu pour classer les objets localisés (F1, F2) d'après des distances croissantes (dj) et ce module de distance (42) est conçu pour calculer les distances minimales (dmin (j)) dans un mode itératif.

**8.** Dispositif selon une des revendications précédentes, **caractérisé en ce que**, pour chacune des distances minimales (dmin(j)), le dispositif de régulation (22) calcule une intervention de régulation correspondante et, parmi ces interventions de régulation, il sélectionne celle qui correspond à la plus petite accélération du véhicule.

**9.** Dispositif selon une des revendications 1 à 7, **caractérisé par** un dispositif (34) qui, parmi plusieurs objets (F1, F2), sélectionne un objet cible pour la régulation de la distance en se basant sur les distances minimales (dmin (j)) qui leur correspondent.

*Fig. 1*

*Fig. 2*

EP 1 426 911 B1

*Fig. 3*

```
                    ┌──────────────┐
                    │    Start     │────44
                    └──────────────┘
                            │
                            ▼
                    ┌──────────────┐
                    │ Liste relevanter │────46
                    │    Objekte       │
                    └──────────────┘
                            │
                            ▼
         nein        ◇ mindestens 1 Objekt? ◇────48
        ◄───────────
                            │ ja
                            ▼
                    ┌──────────────┐
                    │ Sortierung nach │────50
                    │ zunehmenden Abständen │
                    └──────────────┘
                            │
                            ▼
                    ┌──────────────┐
                    │    j = 1     │────52
                    └──────────────┘
                            │
                            ▼
                    ┌──────────────┐
                    │ berechne dsoll = dmin(1) │────54
                    └──────────────┘
                            │
                            ▼
         nein       ◇ weitere Objekte ◇────56
        ◄───────────  vorhanden?
                            │ ja
                            ▼
                    ┌──────────────┐
                    │   j = j+1    │────58
                    └──────────────┘
                            │
                            ▼
          ┌─────────────────────────────────────┐
          │ dmin(j) = dmin(j-1) + L(j-1) + A │────60
          └─────────────────────────────────────┘
                            │
                            ▼
                    ┌──────────────┐
                    │ Mindestabstände ausgeben │────62
                    └──────────────┘
                            │
                            ▼
                    ┌──────────────┐
                    │    Ende      │────64
                    └──────────────┘
```

11

Fig. 4